# EUROPÄISCHE PATENTSCHRIFT

(11) **EP 0 789 288 B1**
(45) Veröffentlichungstag und Bekanntmachung des Hinweises auf die Patenterteilung: **17.10.2001**
(21) Anmeldenummer: 96100817.4
(22) Anmeldetag: 20.01.1996
(51) Int. Cl.: G05B 19/042

(54) **Fernüberwachungssystem und Verwendung eines mobilen Funktelefons hierfür**
Remote monitoring system and use of a mobile radiophone in this system
Système de surveillance à distance et utilisation d'un téléphone mobile dans ce système

(43) Veröffentlichungstag der Anmeldung: 13.08.1997
(73) Patentinhaber: Thyssen Aufzugswerke GmbH, 73765 Neuhausen a.d.F. (DE)
(72) Erfinder: Thumm, Gerhard, D-70794 Filderstadt (DE)
(74) Vertreter: Hoeger, Stellrecht & Partner

(56) Entgegenhaltungen:
- EP-A- 0 390 666
- EP-A- 0 429 056
- EP-A- 0 603 859
- WO-A-90/03724
- FR-A- 2 688 643
- PATENT ABSTRACTS OF JAPAN vol. 015, no. 364 (P-1252), 13.September 1991 & JP-A-03 141467 (NEC ENG LTD), 17.Juni 1991,
- PATENT ABSTRACTS OF JAPAN vol. 014, no. 534 (P-1135), 26.November 1990 & JP-A-02 226397 (HITACHI ELEVATOR ENG & SERVICE CO LTD), 7.September 1990,
- PATENT ABSTRACTS OF JAPAN vol. 014, no. 269 (P-1059), 11.Juni 1990 & JP-A-02 076100 (HITACHI ELEVATOR ENG & SERVICE CO LTD), 15.März 1990,

## Beschreibung

Die vorliegende Erfindung betrifft ein Fernüberwachungssystem für eine Anlage mit einer zugeordneten Anlagensteuerung, insbesondere für eine Anlage zur Beförderung von Personen oder Gütern, wobei eine von der Anlage entfernt angeordnete, zentrale Überwachungsvorrichtung vorgesehen ist, die mit der Anlagensteuerung derart verbindbar ist, daß Daten zwischen der Überwachungsvorrichtung und der Anlagensteuerung übertragbar sind, und wobei der Anlagensteuerung eine Datenein- und/oder -ausgabeeinheit für einen Datenaustausch mit der zentralen Überwachungsvorrichtung zugeordnet ist und wobei eine mobile Serviceeinheit vorgesehen ist zur Herstellung einer drahtlosen Verbindung mit der zentralen Überwachungsvorrichtung.

Anlagen und die zugehörigen Anlagensteuerungen werden immer komplizierter. So werden zunehmend, beispielsweise bei neueren Aufzügen oder Fahrtreppen, Daten der jeweiligen Anlagensteuerung mit einer zentralen Überwachungsvorrichtung zu Überwachungs-, Service- und/oder Steuerungszwecken ausgetauscht, um hierdurch eine Fernüberwachung und idealerweise eine Fernwartung der jeweiligen Anlage zu ermöglichen (Patent Abstracts of Japan, Vol. 014, No. 269 (P. 1059), 11. Juni 1990 & JP-A-02076100 (Hitachi Elevator Eng. & Service Co. Ltd.), 15. März 1990). Die Kommunikation zwischen der Anlagensteuerung und der zentralen Überwachungsvorrichtung erfolgt dabei üblicherweise über eine feste Verkabelung zwischen der Anlagensteuerung und der Überwachungsvorrichtung.

Aus der EP 0 429 056 A2 ist zudem eine Fernsteuerung bekannt, bei der ebenfalls eine feste Verbindung zwischen der Anlagensteuerung und einer Zentraleinheit verwirklicht ist.

Hierbei ist nachteilig, daß ein erheblicher Aufwand erforderlich ist, da zur Herstellung der Verbindung beispielsweise mehradrige, abgeschirmte Leitungen eingesetzt werden.

Weiterhin werden bereits Fernüberwachungssysteme eingesetzt, bei denen am Ort der zu überwachenden Anlage die Anlagensteuerung ein Modem mit automatischer Wähleinrichtung umfaßt und über das öffentliche Telefonnetz mit der zentralen Überwachungsvorrichtung zum Datenaustausch verbunden ist. Im Falle einer Störung kann die Anlagensteuerung die zentrale Überwachungsvorrichtung anwählen und die letztere benachrichtigen. Ein bekanntes Fernüberwachungssystem für Aufzüge kann außerdem nach der Abgabe eines Notrufes automatisch eine Sprechverbindung vom Fahrkorb zur zentralen Überwachungseinrichtung über die lokale Anlagensteuerung mit der zugeordneten Wähleinrichtung herstellen. Im Fahrkorb eingeschlossene Personen können hierdurch beruhigt und die Ankunft eines Servicemonteurs mitgeteilt werden.

Der Anlagensteuerung ist ferner oftmals eine Dateneingabeeinheit und eine Datenausgabeeinheit zugeordnet. So kann Servicepersonal vor Ort über die Dateneingabe- bzw. -ausgabeeinheit Daten und Informationen einerseits mit der zentralen Überwachungsvorrichtung, um beispielsweise nicht über Sensoren erfaßbare Daten oder Störzustände mitzuteilen, und andererseits mit der Anlagensteuerung, um beispielsweise einen Störzustand unmittelbar zu beheben, austauschen.

Bei einem derartigen Fernüberwachungssystem ist nachteilig, daß die benötigte Montagezeit für die Installation hoch ist sowie immer ein fest verlegter Telefonanschluß vorhanden sein muß. Das Fernüberwachungssystem benötigt außerdem je nach nationalen Vorschriften unterschiedliche postalische Zulassungen. Außerdem besteht der Nachteil, daß der Wartungsaufwand verhältnismäßig hoch ist, da zu Begehungen und Inspektionsfahrten der fernüberwachten Anlage durch Servicepersonal vor Ort aus Sicherheitsgründen immer mindestens zwei Servicetechniker vorhanden sein sollten, so daß, wenn einer der beiden beispielsweise eine Inspektionsfahrt auf dem Fahrkorbdach eines Aufzuges unternimmt, der andere bei Störungen oder Notfällen einen Alarm auslösen kann.

Eine Aufzugsanlage ist aus der EP-A-0 603 859 bekannt. Darin wird ein Datenübertragungsnetz vorgeschlagen zur Übertragung von Daten innerhalb der Aufzugsanlage, beispielsweise zwischen der Aufzugssteuerung und einer Fernsteuerung zur Aufzugsbedienung. Hierbei steht die Fernsteuerung in optischer oder Infrarot-Verbindung zur Front der Aufzugstüren.

Der Erfindung liegt die Aufgabe zugrunde, ausgehend von dem eingangs genannten Fernüberwachungssystem, unter Beibehaltung bzw. Verbesserung der Sicherheit der Fernüberwachung Installationszeit und -material eines derartigen Fernüberwachungssystems erheblich zu verringern sowie die Zeit und die Kosten der Überwachung und Wartung zu senken.

Die Aufgabe wird erfindungsgemäß bei einem Fernüberwachungssystem mit den eingangs genannten Merkmalen dadurch gelöst, daß die Serviceeinheit zum Datenaustausch zwischen der Anlagensteuerung und der zentralen Überwachungsvorrichtung im Übertragungsweg zwischen der Anlagensteuerung und der zentralen Überwachungsvorrichtung angeordnet und beim Datenaustausch zwischen der zentralen Überwachungsvorrichtung und der Anlagensteuerung mit der Anlagensteuerung verbunden ist, und daß die Serviceeinheit die Datenein- und/oder -ausgabeeinheit umfaßt, so daß bei getrennter Verbindung der Serviceeinheit zu der Anlagensteuerung der Datenaustausch zwischen der Serviceeinheit und der zentralen Überwachungsvorrichtung über die Datenein- und/oder -ausgabeeinheit erfolgt.

Bei dem erfindungsgemäßen Fernüberwachungssystem ist die Kommunikation mit der zentralen Überwachungsvorrichtung wesentlich erleichtert, insbesondere weil die mobile Serviceeinheit nicht drahtgebunden ist und ohne gesonderte Anschlüsse an das Telekommunikationsnetz den Kontakt mit der zentralen Überwachungsvorrichtung herstellen und/oder aufrechterhalten kann.

Mit der mobil ausgebildeten Serviceeinheit, die eine Datenein- und/oder -ausgabeeinheit umfaßt, wird es dem Servicepersonal an der zu überwachenden Anlage vor Ort ermöglicht, ständig mit der zentralen Überwachungsvorrichtung Kontakt zu halten und Daten bzw. Informationen auszutauschen, da die Serviceeinheit vom Servicepersonal mitgenommen werden kann und beispielsweise eine Inspektionsfahrt auf dem Fahrkorbdach bei einer Aufzuganlage durchgeführt werden kann, ohne daß die Verbindung zur zentralen Überwachungsvorrichtung unterbrochen werden muß.

Dies führt zu dem Vorteil, daß eine mögliche Gefährdung eines Servicetechnikers, der allein Wartungsarbeiten bei Förderanlagen durchführt, deutlich verringert werden kann, da dieser ständig Kontakt mit der zentralen Überwachungsvorrichtung halten und im Notfall einen Alarm auslösen kann.

Ein zusätzlicher Vorteil ergibt sich dadurch, daß die drahtlose Verbindung zur zentralen Überwachungsvorrichtung den ansonsten erforderlichen Verkabelungsaufwand auf ein Minimum reduziert, da die Serviceeinheit in unmittelbarer Nähe zur Anlagensteuerung angeordnet werden kann und die Datenverbindung zur zentralen Überwachungsvorrichtung zumindest bis zur nächsten Gegenstelle, wie einer Sende- und Empfangseinheit des D- oder des E-Netzes, drahtlos erfolgt.

Vorzugsweise ist die Serviceeinheit so ausgebildet, daß mittels der Datenein- und/oder -ausgabeeinheit Daten zwischen der Serviceeinheit und der Anlagensteuerung austauschbar sind. Dies ermöglicht Servicepersonal am Ort der Anlage unter Nutzung der vorhandenen Datenein- und/oder -ausgabeeinheit direkt mit der Anlagensteuerung zu kommunizieren, um beispielsweise Steuerbefehle einzugeben oder Sensorwerte abzurufen.

Eine bevorzugte Ausführungsform des Fernüberwachungssystems zeichnet sich dadurch aus, daß die Serviceeinheit und die Anlagensteuerung so ausgebildet sind, daß Daten zwischen diesen drahtlos übertragbar sind. Hierbei kann die Datenübertragung beispielsweise per Funk- oder per Infrarot-Signalen erfolgen. So wird eine quasi beliebige und insbesondere ergonomisch günstige Anordnung der Serviceeinheit in der Nähe der Anlagensteuerung ermöglicht, ohne daß eine direkte Leitungsverbindung zur Anlagensteuerung erforderlich ist. Zudem kann je nach Ausbildung der drahtlosen Verbindung zwischen Serviceeinheit und Anlagensteuerung auch bei Inspektionsfahrten durch das Servicepersonal über die mitgeführte Serviceeinheit mit der Anlagensteuerung Kontakt gehalten werden. Jedoch bleibt in jedem Fall, auch wenn diese Verbindung aufgrund zu kurzer Reichweite oder einer Störung getrennt werden sollte, immer die Möglichkeit erhalten, daß das Servicepersonal über die mobile Serviceeinheit mit der zentralen Überwachungsvorrichtung Verbindung aufnimmt.

Alternativ ist die Serviceeinheit so ausgebildet, daß sie zur Herstellung einer leitungsgebundenen Verbindung zwischen sich und der Anlagensteuerung an eine Schnittstelle der letzteren anschließbar ist. Vorzugsweise ist dabei die Serviceeinheit derart ausgebildet, daß sie an eine genormte Schnittstelle (Bussystem) der Anlagensteuerung anschließbar ist, so daß der erforderliche Aufwand minimal bleibt. Durch den Einsatz einer leitungsgebundenen Datenverbindung zwischen der Serviceeinheit und der zugeordneten Anlagensteuerung wird eine sehr betriebssichere Fernüberwachung ermöglicht. Für die Mitnahme der Serviceeinheit zu Inspektionsfahrten wird dann die Leitung zwischen der Serviceeinheit und der Anlagensteuerung vom Servicepersonal aufgetrennt. Während des Serviceeinsatzes kann die Verbindungsleitung getrennt bleiben oder auch auf Wunsch an anderer Stelle, z.B. auf dem Fahrkorbdach, über ein Bussystem wieder hergestellt werden.

Gemäß einer bevorzugten Ausführungsvariante ist vorgesehen, daß die Serviceeinheit so ausgebildet ist, daß bei mehreren Anlagensteuerungen verschiedener Anlagen auswählbar ist, zu welcher Anlagensteuerung eine Datenverbindung herstellbar ist. Hierdurch können mit einer einzigen Serviceeinheit mehrere Anlagensteuerungen verschiedener Anlagen fernüberwacht werden, so daß der für die Fernüberwachung erforderliche apparative Aufwand minimal ist.

Eine besonders bevorzugte Ausführungsform zeichnet sich dadurch aus, daß die Serviceeinheit ein mobiles Funktelefon und insbesondere eine daran anschließbare Übertragungseinheit zur Herstellung der Verbindung zwischen dem Funktelefon und der Anlagensteuerung umfaßt. Durch den Einsatz eines handelsüblichen Funktelefons, wie es beispielsweise für ein Mobilfunknetz als sogenanntes "Handy" angeboten wird, kann auf preisgünstige Massenartikel zurückgegriffen werden, die meistens bereits die erforderlichen Post- und Fernmeldezulassungen besitzen. Zudem umfassen derartige Funktelefone bereits ein Tastenfeld als Dateneingabeeinheit und ein Display als Datenausgabeeinheit, so daß diese Telefone optimal zur Übertragung von Informationen im allgemeinen und Daten im besonderen geeignet sind, insbesondere für die Verwendung als Diagnosegerät. Als Diagnosegerät kann die Serviceeinheit, gegebenenfalls in Form des Funktelefons, zur Abfrage und Anzeige von Betriebs-, Zustands- und/oder Störungsdaten eingesetzt werden.

Aufgrund der flächendeckenden Verbreitung der entsprechenden Funknetze sind so bei geringem Aufwand eine sichere Anbindung der Anlagensteuerung an die zentrale Überwachungsvorrichtung und damit eine sehr betriebssichere Fernüberwachung möglich.

Eine vorteilhafte Weiterbildung zeichnet sich dadurch aus, daß hierbei die Übertragungseinheit zugleich als Ladestation für das Funktelefon ausgebildet ist, so daß bei hergestellter Datenverbindung zwischen Übertragungseinheit und Funktelefon gleichzeitig ein Aufladen des Funktelefons erfolgen kann. Da im Normalzustand der Fernüberwachung die Datenverbindung zwischen dem Funktelefon und der Anlagensteuerung hergestellt ist, ist sichergestellt, daß die Akkumulatoren des Funktelefons immer aufgeladen sind, wenn Servicepersonal das Funktelefon für Inspektionen von der Übertragungseinheit trennt und mit sich führt.

Erfindungsgemäß wird eine mit geringem Aufwand herstellbare Fernüberwachung auch durch die Verwendung eines mobilen Funktelefons zur Fernüberwachung einer Anlage mit einer zugeordneten Anlagensteuerung, insbesondere einer Anlage zur Beförderung von Personen oder Gütern, realisiert, wobei eine von der Anlage entfernt angeordnete, zentrale Überwachungsvorrichtung vorgesehen ist, die mit der Anlagensteuerung über das Funktelefon und eine daran anschließbare Übertragungseinheit verbindbar ist, indem eine drahtlose Verbindung zwischen der Überwachungsvorrichtung und dem Funktelefon sowie eine Verbindung zwischen der Übertragungseinheit und der Anlagensteuerung hergestellt wird, so daß Daten zwischen der zentralen Überwachungsvorrichtung und der Anlagensteuerung austauschbar sind, wobei die Tastatur und/oder das Display des Funktelefons als der Anlagensteuerung zugeordnete Datenein- und -ausgabeeinheit für einen Datenaustausch mit der zentralen Überwachungsvorrichtung dient, und wobei auch bei getrennter Verbindung des Funktelefons zu der Anlagensteuerung über die Tastatur und/oder das Display des Funktelefons Daten mit der zentralen Überwachungsvorrichtung austauschbar sind.

Die Verwendung eines Funktelefons führt zu dem Vorteil, daß bei Inspektionsfahrten mit der zu überwachenden Anlage das Funktelefon vom Servicepersonal ständig mitgeführt und dadurch ständig Kontakt zur zentralen Überwachung gehalten werden kann. Dies resultiert in einer deutlich erhöhten Sicherheit gegenüber herkömmlichen Fernüberwachungen, da das Servicepersonal bei derartigen Inspektionen immer auf Informationen der zentralen Überwachung zugreifen bzw. Notfälle oder Störungen unmittelbar melden kann.

Zudem wird durch den Einsatz eines handelsüblichen mobilen Funktelefons, eines sogenannten "Handys", auf sehr einfache Weise eine hochgradig betriebssichere Verbindung zur zentralen Überwachungsvorrichtung hergestellt, so daß bei geringem Verkabelungsaufwand eine sichere Fernüberwachung ermöglicht wird. Dabei kann beispielsweise ein mit einem Auto zur Anlage fahrender Monteur aus seinem Fahrzeug heraus mit einem Funktelefon das Handy der Anlage anwählen und die Fahrgäste im stehengebliebenen Fahrkorb beruhigen oder vorab Diagnosedaten abfragen. Hierzu mußte bisher immer der Umweg über die Überwachungszentrale genommen werden.

Aufgrund der Massenherstellung dieser Funktelefone sind die Gestehungskosten gering. Zudem kann über standardisierte Schnittstellen, wie eine PCMCIA-Einsteckkarte, eine Datenverbindung zur Anlagensteuerung sehr einfach hergestellt werden.

Weiterhin betrifft die Erfindung die Verwendung eines mobilen Funktelefons zu einer derartigen Fernüberwachung.

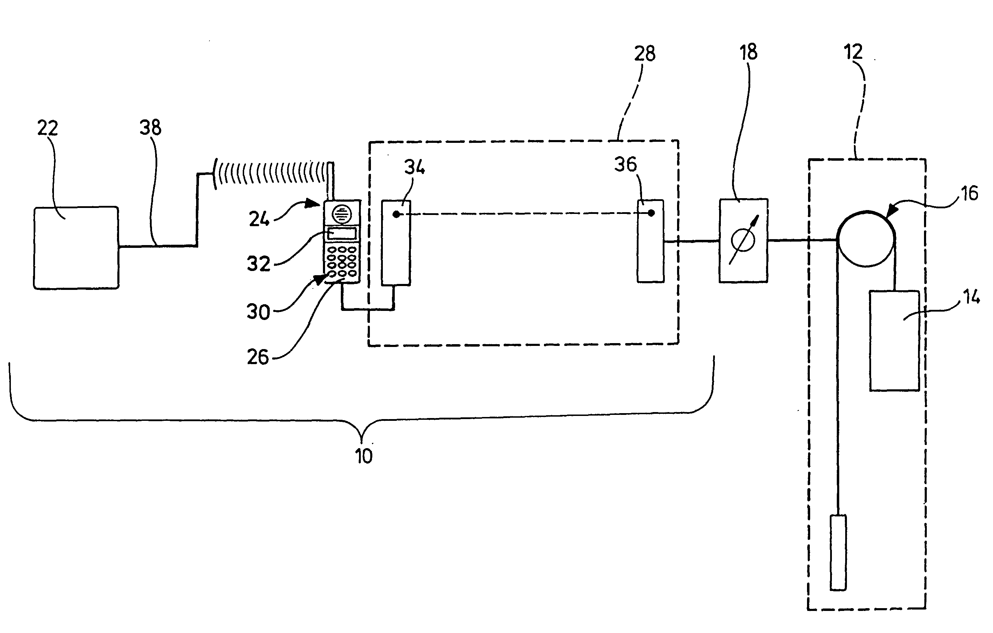

Nachfolgend wird die Erfindung anhand der Zeichnung eines Ausführungsbeispiels näher erläutert. Die Zeichnung zeigt eine schematische Darstellung eines vorschlagsgemäßen Fernüberwachungssystems für eine Anlage.

Das vorschlagsgemäße Fernüberwachungssystem 10 dient der Fernüberwachung einer Anlage 12, die hier beispielhaft als ein Aufzug 14 für nicht dargestellte Personen oder Güter mit einem Antrieb 16 und einer den Antrieb 16 steuernden Anlagensteuerung 18, die in der Nähe der Anlage 12 angeordnet ist, dargestellt ist. Die Anlage 12 kann beispielsweise auch durch eine Fahr- oder Rolltreppe oder eine sonstige Anlage gebildet sein; wesentlich ist, daß der jeweilige Antrieb 16 von der zugeordneten Anlagensteuerung 18 steuerbar ist.

Zu dem Fernüberwachungssystem 10 gehört eine von der zu überwachenden Anlage 12 umfaßte, mobile Serviceeinheit 24 und eine von der Anlage 12 entfernt angeordnete, zentrale Überwachungsvorrichtung 22.

Die mobile Serviceeinheit 24 umfaßt beim Darstellungsbeispiel ein handelsübliches Funktelefon 26 und eine daran anschließbare Übertragungseinheit 28, die der Herstellung einer Datenverbindung zwischen dem Funktelefon 26 und der Anlagensteuerung 18 dient.

Das Funktelefon 26 ist beim Darstellungsbeispiel ein sogenanntes "Handy" für ein Mobilfunknetz, wie das D- oder E-Netz. Die mobile Serviceeinheit 24 umfaßt eine Dateneingabeeinheit 30 in Form der Tastatur des Funktelefons 26 und eine Datenausgabeeinheit 32 in Form des Displays des Funktelefons 26. Die Serviceeinheit 24 ist hier über eine nicht näher bezeichnete Schnittstelle leitungsgebunden mit der Übertragungseinheit 28 verbindbar, indem beispielsweise ein entsprechendes, nicht dargestelltes Steckelement in die Serviceeinheit 24 eingesteckt wird.

Beim dargestellten Ausführungsbeispiel besteht die Übertragungseinheit 28 aus einem ersten, mit der mobilen Serviceeinheit 24, beispielsweise steckbar, elektronisch und mechanisch verbindbaren Übertragungsteil 34 und einem zweiten Übertragungsteil 36, das über eine nicht näher gekennzeichnete Leitung mit der Anlagensteuerung 18 verbunden ist. Die beiden Übertragungsteile 34 und 36 stellen zwischen sich eine drahtlose Datenverbindung beispielsweise über Funk- oder Infrarot-Signale her.

So ist die Serviceeinheit 24 entweder für sich allein oder zusammen mit dem angeschlossenen ersten Übertragungsteil 34 mobil und kann bei Inspektionen der Anlage 12 von Servicepersonal mitgeführt werden. Zur Energieversorgung umfassen die Serviceeinheit 24 und/oder das erste Übertragungsteil 34 Akkumulatoren, die über eine nicht dargestellte Ladeeinrichtung wieder aufladbar sind.

Bei Bedarf kann das erste Übertragungsteil 34 auch stationär ausgebildet sein und mit einer entsprechenden Stromversorgung und Ladeeinrichtung versehen sein, so daß Akkumulatoren in der mobilen Serviceeinheit 24 von der Übertragungseinheit 28 bzw. dem ersten Übertragungsteil 34 aufgeladen werden können.

Alternativ kann die Übertragungseinheit 28 beispielsweise auch durch eine einzige stationäre Einheit gebildet sein, die einerseits fest mit der Anlagensteuerung 18 verbunden ist und andererseits eine Anschlußmöglichkeit für die mobile Serviceeinheit 24 bietet.

In jedem Fall ist es wesentlich, daß die Übertragungseinheit 28 die Möglichkeit bietet, eine Datenverbindung zwischen der mobilen Serviceeinheit 24 und der Anlagensteuerung 18 herzustellen.

Die zentrale Überwachungsvorrichtung 22 kann über einen üblichen Telefonanschluß 38 auf das D- oder E-Netz oder ein sonstiges Funknetz zugreifen, um die mobile Serviceeinheit 24 anwählen und mit dieser Kontakt aufnehmen zu können. Umgekehrt kann auch die mobile Serviceeinheit 24 von der Übertragungseinheit 28 automatisch gesteuert oder von Servicepersonal am Ort der zu überwachenden Anlage 12 initiiert mit der zentralen Überwachungsvorrichtung 22 zum Austausch von Informationen, insbesondere Daten und ggf. auch Sprache, Verbindung aufnehmen.

Ein wesentlicher Aspekt ist hierbei, daß die Verbindung zwischen der mobilen Serviceeinheit 24 und der zentralen Überwachungsvorrichtung 22 zumindest insoweit drahtlos erfolgt, als der sich unmittelbar an die Serviceeinheit 24 anschließende Abschnitt der Verbindung drahtlos ausgeführt ist. Hierdurch wird die gewünschte Mobilität der Serviceeinheit 24 gewährleistet. Je nach Bedarf kann dabei die drahtlose Verbindung unmittelbar bis zur zentralen Überwachungsvorrichtung 22 bereitgestellt oder die Verbindung beispielsweise unter Inanspruchnahme eines öffentlich zugänglichen Telefonnetzes hergestellt werden.

Im Normalbetrieb des Fernüberwachungssystems 10 ist die mobile Serviceeinheit 24 an die Übertragungseinheit 28 angeschlossen und eine Datenverbindung zur Anlagensteuerung 18 hergestellt. Weiter besteht entweder eine ständige Verbindung oder eine bei Bedarf aufzubauende Verbindung zwischen der Serviceeinheit 24 und der zentralen Überwachungsvorrichtung 22. Im letztgenannten Fall kann die Datenverbindung durch die Überwachungsvorrichtung 22, um beispielsweise Überwachungsparameter von der Anlagensteuerung 18 abzufragen, oder durch die Anlagensteuerung 18 oder die Übertragungseinheit 28, um beispielsweise eine Störsituation an die zentrale Überwachungsvorrichtung 22 zu melden, aufgebaut werden.

So ist es möglich, über die Serviceeinheit 24 und die Übertragungseinheit 28 Daten zwischen der Anlagensteuerung 18 und der zentralen Überwachungsvorrichtung 22 zu Überwachungs-, Diagnose-, Service- oder Reparaturzwecken zu übermitteln. Insbesondere für eine Diagnosefunktion werden dabei von Sensoren aufgenommene Meßwerte, die den Zustand der zu überwachenden Anlage 12 charakterisieren, an die zentrale Überwachungsvorrichtung 22 übermittelt und von dieser bei Bedarf Steuerbefehle an die Anlagensteuerung 18 übertragen.

Besonders vorteilhaft ist nun, daß die Service- oder Diagnosefunktion direkt mit dem als mobile Serviceeinheit 24 eingesetzten Funktelefon wahrgenommen werden kann, da sowohl ein Display zum Anzeigen als auch Elemente zum Eingeben von Daten vorhanden sind.

Wenn sich zu Wartungsarbeiten oder im Falle eines Notfalls Servicepersonal am Ort der Anlage 12 befindet, kann das Personal über die Eingabeeinheit 30 und Ausgabeeinheit 32 der Serviceeinheit 24 Daten mit der zentralen Überwachungsvorrichtung 22 und der Anlagensteuerung 18 austauschen, um beispielsweise an die erste bestimmte Vorkommnisse zu melden und Steuerbefehle für die zweite einzugeben oder Meßwerte von dieser abzufragen.

Zudem kann das Servicepersonal die mobile Serviceeinheit 24 bei Inspektionen der Anlage, wie bei Probefahrten mit dem Aufzug 14 oder dergleichen, mit sich führen und hierbei zumindest mit der zentralen Überwachungsvorrichtung 22 und ggf. auch mit der Anlagensteuerung 18 Kontakt halten. Je nach Ausführungsform bleibt dabei die mobile Serviceeinheit 24 beispielsweise mit dem dann ebenfalls mobil ausgebildeten und mitgeführten ersten Übertragungsteil 34 verbunden oder die Verbindung zwischen der mobilen Serviceeinheit 24 und der Übertragungseinheit 28 wird für den mobilen Einsatz der Serviceeinheit 24 aufgetrennt. Hierzu weist die Serviceeinheit 24 eine netzunabhängige Energieversorgung durch nicht dargestellte Akkumulatoren auf, die mittels einer nicht dargestellten Ladevorrichtung oder der Übertragungseinheit 28 wieder aufgeladen werden.

## Patentansprüche

1. Fernüberwachungssystem für eine Anlage (12) mit einer zugeordneten Anlagensteuerung (18), insbesondere für eine Anlage zur Beförderung von Personen oder Gütern, wobei eine von der Anlage (12) entfernt angeordnete, zentrale Überwachungsvorrichtung (22) vorgesehen ist, die mit der Anlagensteuerung (18) derart verbindbar ist, daß Daten zwischen der zentralen Überwachungsvorrichtung (22) und der Anlagensteuerung (18) übertragbar sind, und wobei der Anlagensteuerung (18) eine Datenein- und/oder -ausgabeeinheit (30, 32) für einen Datenaustausch mit der zentralen Überwachungsvorrichtung (22) zugeordnet ist und wobei eine mobile Serviceeinheit (24) vorgesehen ist zur Herstellung einer drahtlosen Verbindung mit der zentralen Überwachungsvorrichtung (22)
**dadurch gekennzeichnet,**
**daß** die Serviceeinheit (24) zum Datenaustausch zwischen der Anlagensteuerung (18) und der zentralen Überwachungsvorrichtung (22) im Übertragungsweg zwischen der Anlagensteuerung (18) und der zentralen Überwachungsvorrichtung (22) angeordnet und beim Datenaustausch zwischen der zentralen Überwachungsvorrichtung (22) und der Anlagensteuerung (18) mit der Anlagensteuerung (18) verbunden ist,
und **daß** die Serviceeinheit (24) die Datenein- und/oder -ausgabeeinheit (30, 32) umfaßt, so daß auch bei getrennter Verbindung der Serviceeinheit (24) zu der Anlagensteuerung (18) der Datenaustausch zwischen der Serviceeinheit (24) und der zentralen Überwachungsvorrichtung (22) über die Datenein- und/oder -ausgabeeinheit (30, 32) erfolgt.

2. Fernüberwachungssystem nach Anspruch 1, **dadurch gekennzeichnet, daß** die Serviceeinheit (24) so ausgebildet ist, daß mittels der Datenein- und/oder -ausgabeeinheit (30, 32) Daten zwischen der Serviceeinheit (24) und der Anlagensteuerung (18) austauschbar sind.

3. Fernüberwachungssystem nach Anspruch 1 oder 2, **dadurch gekennzeichnet, daß** die Serviceeinheit (24) und die Anlagensteuerung (18) so ausgebildet sind, daß Daten zwischen diesen drahtlos übertragbar sind.

4. Fernüberwachungssystem nach Anspruch 1 oder 2, **dadurch gekennzeichnet, daß** die Serviceeinheit (24) so ausgebildet ist, daß sie zur Herstellung einer leitungsgebundenen Verbindung zwischen ihr und der Anlagensteuerung (18) an eine Schnittstelle der letzteren anschließbar ist.

5. Fernüberwachungssystem nach einem der voranstehenden Ansprüche, **dadurch gekennzeichnet, daß** die Serviceeinheit (24) so ausgebildet ist, daß bei mehreren Anlagensteuerungen (18) verschiedener Anlagen (12) auswählbar ist, zu welcher Anlagensteuerung (18) eine Datenverbindung herstellbar ist.

6. Fernüberwachungssystem nach einem der voranstehenden Ansprüche, **dadurch gekennzeichnet, daß** die Serviceeinheit (24) als Diagnosegerät ausgebildet ist.

7. Fernüberwachungssystem nach einem der voranstehenden Ansprüche, **dadurch gekennzeichnet, daß** die Serviceeinheit (24) ein mobiles Funktelefon (26) umfaßt.

8. Fernüberwachungssystem nach Anspruch 7, **dadurch gekennzeichnet, daß** das mobile Funktelefon (26) als Diagnosegerät verwendbar ist.

9. Fernüberwachungssystem nach Anspruch 7 oder 8, **dadurch gekennzeichnet, daß** die Serviceeinheit (24) eine an das Funktelefon (26) anschließbare Übertragungseinheit (28) zur Herstellung der Verbindung zwischen dem Funktelefon (26) und der Anlagensteuerung (18) umfaßt.

10. Fernüberwachungssystem nach Anspruch 9, **dadurch gekennzeichnet, daß** die Übertragungseinheit (28) als Ladestation für das Funktelefon (26) ausgebildet ist, so **daß** bei hergestellter Verbindung zwischen Übertragungseinheit (28) und Funktelefon (26) gleichzeitig ein Aufladen des Funktelefons (26) erfolgen kann.

11. Verwendung eines mobilen Funktelefons (26) zur Fernüberwachung einer Anlage (12) mit einer zugeordneten Anlagensteuerung (18), insbesondere einer Anlage (12) zur Beförderung von Personen oder Gütern, wobei eine von der Anlage (12) entfernt angeordnete, zentrale Überwachungsvorrichtung (22) vorgesehen ist, die zum Datenaustausch mit der Anlagensteuerung (18) über das Funktelefon (26) derart verbunden wird, indem eine drahtlose Verbindung zwischen der zentralen Überwachungsvorrichtung (22) und dem Funktelefon (26) sowie eine Verbindung zwischen dem Funktelefon (26) und der Anlagensteuerung (18) hergestellt wird, so daß Daten zwischen der zentralen Überwachungsvorrichtung (22) und der Anlagensteuerung (18) ausgetauscht werden, und wobei die Tastatur und/ oder das Display des Funktelefons (26) als der Anlagensteuerung (18) zugeordnete Datenein- und/oder -ausgabeeinheit (30/32) für einen Datenaustausch mit der zentralen Überwachungsvorrichtung (22) dient, so daß auch bei getrennter Verbindung des Funktelefons (26) zu der Anlagensteuerung (18) über die Tastatur und/oder das Display des Funktelefons (26) der Datenaustausch mit der zentralen Überwachungsvorrichtung (22) erfolgt.

12. Verwendung eines mobilen Funktelefons nach Anspruch 11, wobei an das Funktelefon eine Übetragungseinheit (28) anschließbar ist zur Herstellung einer Verbindung zwischen dem Funktelefon (26) und der Anlagesteuerung (18).

## Claims

1. A remote monitoring system for an installation (12) with an associated installation control mechanism (18), in particular for an installation for conveying persons or goods, wherein a central monitoring device (22) is arranged remotely from the installation (12) and is connectable to the installation control mechanism (18) in such a way that data is transmittable between the central monitoring device (22) and the installation control mechanism (18), and wherein a data input and/or output unit (30, 32) for data exchange with the central monitoring device (22) is associated with the installation control mechanism (18), and wherein a mobile service unit (24) is provided for establishing a wireless connection to the central monitoring device (22), **characterised in that** the service unit (24) for data exchange between the installation control mechanism (18) and the central monitoring device (22) is arranged in the transmission path between the installation control mechanism (18) and the central monitoring device (22) and is connected to the installation control mechanism (18) during data exchange between the central monitoring device (22) and the installation control mechanism (18), and **in that** the service unit (24) comprises the data input and/or output unit (30, 32) so that, even when the connection between the service unit (24) and the installation control mechanism (18) is broken, data exchange takes place between the service unit (24) and the central monitoring device (22) via the data input and/or output unit (30, 32).

2. A remote monitoring system according to claim 1, **characterised in that** the service unit (24) is formed so that data is exchangeable between the service unit (24) and the installation control mechanism (18) by means of the data input and/or output unit (30, 32).

3. A remote monitoring system according to claim 1 or 2, **characterised in that** the service unit (24) and the installation control mechanism (18) are formed so that data is wirelessly transmittable therebetween.

4. A remote monitoring system according to claim 1 or 2, **characterised in that**, in order to establish a line-bound connection between the service unit (24) and the installation control mechanism (18), the service unit (24) is connectable to an interface between it and the installation control mechanism (18).

5. A remote monitoring system according to any one of the preceding claims, **characterised in that** the service unit (24) is formed so that, with a plurality of installation control mechanisms (18) of different installations (12), it is possible to select the installation control mechanism (18) to which a data connection is established.

6. A remote monitoring system according to any one of the preceding claims, **characterised in that** the service unit (24) is formed as a diagnostic device.

7. A remote monitoring system according to any one of the preceding claims, **characterised in that** the service unit (24) comprises a mobile radio telephone (26).

8. A remote monitoring system according to claim 7, **characterised in that** the mobile radio telephone (26) is usable as a diagnostic device.

9. A remote monitoring system according to claim 7 or 8, **characterised in that** the service unit (24) comprises a transmission unit (28), connectable to the radio telephone (26), for establishing the connection between the radio telephone (26) and the installation control mechanism (18).

10. A remote monitoring system according to claim 9, **characterised in that** the transmission unit (28) is formed as a charging station for the radio telephone (26) so that, when the connection is established between the transmission unit (28) and the radio telephone (26), the radio telephone (26) can simultaneously be charged.

11. Use of a mobile radio telephone (26) for remotely monitoring an installation (12) with an associated installation control mechanism (18), in particular an installation (12) for conveying persons or goods, wherein a central monitoring device (22) is arranged remotely from the installation (12) and, for data exchange, is connected to the installation control mechanism (18) via the radio telephone (26) in such a way that data is exchanged between the central monitoring device (22) and the installation control mechanism (18) by a wireless connection being established between the central monitoring device (22) and the radio telephone (26) and by a connection being established between the radio telephone (26) and the installation control mechanism (18), and wherein the keypad and/or the display of the radio telephone (26) serves as a data input and/or output unit (30, 32), associated with the installation control mechanism (18), for data exchange with the central monitoring device (22) so that, even when the connection between the radio telephone (26) and the installation control mechanism (18) via the keypad and/or the display of the radio telephone (26) is broken, data exchange with the central monitoring device (22) takes place.

12. Use of a mobile radio telephone according to claim 11, wherein a transmission unit (28) is connectable to the radio telephone for establishing a connection between the radio telephone (26) and the installation control mechanism (18).

## Revendications

1. Dispositif de télésurveillance d'une installation (12) comportant une unité de commande associée (18), notamment pour une installation' de transport de personnes ou de marchandises, dans lequel il est prévu un dispositif central de surveillance (22), qui est situé dans une position éloignée de l'installation (12) et peut être relié à l'unité de commande (18) de l'installation de telle sorte que des données peuvent être transmises entre le dispositif central de surveillance (22) et l'unité de commande (18) de l'installation, une unité (30, 32) d'entrée et/ou de sortie de données est associée à l'unité de commande (18) de l'installation pour un échange de données avec le dispositif central de contrôle (22), et dans lequel il est prévu une unité de service mobile (24) permettant d'établir une liaison sans fil avec le dispositif central de contrôle (22),
**caractérisé en ce**
**que** l'unité de service (24) est disposée, pour l'échange de données entre l'unité de commande (18) de l'installation et le dispositif central de surveillance (22), dans la voie de transmission entre l'unité de commande (18) de l'installation et le dispositif central de surveillance (22) et, dans le cas d'un échange de données entre le dispositif central de contrôle (22) et l'unité de commande (18) de l'installation, est reliée à l'unité de commande (18) de l'installation, et
que l'unité de service (24) inclut l'unité (30, 32) d'entrée et/ou de sortie de données de telle sorte que même dans le cas d'une liaison séparée de l'unité de service (24) avec l'unité de commande (18) de l'installation, l'échange des données entre l'unité de service (24) et le dispositif central de surveillance (22) s'effectue par l'intermédiaire de l'unité (30, 32) d'entrée et/ou de sortie de données.

2. Système de télésurveillance selon la revendication 1, **caractérisé en ce que** l'unité de service (24) est agencée de telle sorte que des données peuvent être échangées entre l'unité de service (24) et l'unité de commande (18) de l'installation au moyen de l'unité ( 30, 32) d'entrée et/ou de sortie de données.

3. Système de télésurveillance selon la revendication 1 ou 2, **caractérisé en ce que** l'unité de service (24) et l'unité de commande (18) de l'installation sont agencées de telle sorte que des données peuvent être transmises sans fil entre ces unités.

4. Système de télésurveillance selon la revendication 1 ou 2, **caractérisé en ce que** l'unité de service (24) est agencée de telle sorte que pour l'établissement d'une liaison au moyen d'une ligne entre elle-même et l'unité de commande (18) de l'installation, l'unité de service peut être raccordée à une interface de l'unité de commande de l'installation.

5. Système de télésurveillance selon l'une des revendications précédentes, **caractérisé en ce que** l'unité de service (24) est agencée de telle sorte que dans le cas de plusieurs unités différentes de commande (18) de l'installation, on peut sélectionner l'unité de commande (18) de l'installation à partir de laquelle une liaison de transmission de données peut être établie.

6. Système de télésurveillance selon l'une des revendications précédentes, **caractérisé en ce que** l'unité de service (24) est agencée sous la forme d'un appareil de diagnostic.

7. Système de télésurveillance selon l'une quelconque des revendications précédentes, **caractérisé en ce que** l'unité de service (24) inclut un radiotéléphone mobile (26).

8. Système de télésurveillance selon la revendication 7, **caractérisé en ce que** le radiotéléphone mobile (26) peut être utilisé en tant qu'appareil de diagnostic.

9. Système de télésurveillance selon la revendication 7 ou 8, **caractérisé en ce que** l'unité de service (24) inclut une unité de transmission (28), qui peut être raccordée au radiotéléphone (26) et sert à établir la liaison entre le radiotéléphone (26) et l'unité de commande (18) de l'installation.

10. Système de télésurveillance selon la revendication 9, **caractérisé en ce que** l'unité de transmission (28) est agencée sous la forme d'un poste de charge pour le radiotéléphone (26) de telle sorte que, lorsqu'une liaison est établie entre l'unité de transmission (28) et le radiotéléphone (26), une opération de charge du radiotéléphone (26) peut s'effectuer simultanément.

11. Utilisation d'un radiotéléphone mobile (26) pour la télésurveillance d'une installation (12) comprenant une unité associée de commande (18) de l'installation, notamment d'une installation (12) pour le transport de personnes ou de marchandises, dans laquelle il est prévu un dispositif central de surveillance (22) qui est situé dans une position éloignée de l'installation (12) et qui pour l'échange de données avec l'unité de commande (18) de l'installation est reliée au moyen du radiotéléphone (26) de telle sorte qu'une liaison sans fil est établie entre le dispositif central de surveillance (22) et le radiotéléphone (26) et qu'une liaison est établie entre le radiotéléphone (26) et l'unité de commande (18) de l'installation de sorte que des données sont échangées entre le dispositif central de télésurveillance (22) et l'unité de commande (18) de l'installation, et selon laquelle le clavier et/ou le dispositif d'affichage du radiotéléphone (26) sont utilisés en tant qu'unité (30, 32) d'entrée et/ou de sortie de données associée à l'unité de commande (18) de l'installation, pour un échange de données avec le dispositif central de surveillance (22), de sorte que même dans le cas d'une liaison séparée du radiotéléphone (26)avec l'unité de commande (18) de l'installation, l'échange de données avec le dispositif central de surveillance (22) s'effectue par l'intermédiaire du clavier et/ou du dispositif d'affichage du radiotéléphone (26).

12. Utilisation d'un radiotéléphone mobile selon la revendication 11, selon laquelle une unité de transmission (28) peut être raccordée au radiotéléphone, pour l'établissement d'une liaison entre le radiotéléphone (26) et l'unité de commande (18) de l'installation.
